# EUROPEAN PATENT SPECIFICATION

(11) **EP 3 444 757 B1**
(45) Date of publication and mention of the grant of the patent: **07.07.2021**
(21) Application number: 16898260.1
(22) Date of filing: 15.04.2016
(51) Int. Cl.: G06N 3/02, G06N 3/063, G06N 3/08, G06N 3/04

(54) **DISCRETE DATA REPRESENTATION SUPPORTED DEVICE AND METHOD FOR FORWARD OPERATION OF ARTIFICIAL NEURAL NETWORK**
DURCH DISKRETE DATENDARSTELLUNG UNTERSTÜTZTE VORRICHTUNG UND VERFAHREN ZUM VORWÄRTSBETRIEB EINES KÜNSTLICHEN NEURONALEN NETZWERKS
DISPOSITIF ET PROCÉDÉ À REPRÉSENTATION DE DONNÉES DISCRÈTE PRISE EN CHARGE POUR UNE OPÉRATION DE TRANSFERT D'UN RÉSEAU NEURONAL ARTIFICIEL

(43) Date of publication of application: 20.02.2019
(73) Proprietor: Cambricon Technologies Corporation Limited, Beijing 100191 (CN)
(72) Inventor: LIU, Shaoli, Beijing 100190 (CN); YU, Yong, Beijing 100190 (CN); CHEN, Yunji, Beijing 100190 (CN); CHEN, Tianshi, Beijing 100190 (CN)
(74) Representative: Huang, Liwei
(86) International application number: PCT/CN2016/079431
(87) International publication number: WO 2017/177442

(56) References cited:
- WO-A1-2016/037351
- CN-A- 101 963 983
- CN-A- 103 399 486
- CN-A- 103 886 519
- CN-A- 104 462 459
- P.O. DOMINGOS ET AL: "An efficient and scalable architecture for neural networks with backpropagation learning", PROCEEDINGS / 2005 INTERNATIONAL CONFERENCE ON FIELD PROGRAMMABLE LOGIC AND APPLICATIONS (FPL) : TAMPERE HALL, TAMPERE, FINLAND, AUGUST 24 - 26, 2005, 24 August 2005 (2005-08-24), - 26 August 2005 (2005-08-26), pages 89-94, XP055606447, Piscataway, NJ DOI: 10.1109/FPL.2005.1515704 ISBN: 978-0-7803-9362-2
- ZHOUHAN LIN ET AL: "Neural Networks with Few Multiplications", CORR (ARXIV), vol. 1510.03009v3, 26 February 2016 (2016-02-26), pages 1-9, XP055414215,
- ZHANG, XIAN: "An Algorithm for Training Back-propagation Neural Networks Based on Data Parallelism", China Master's Theses Full-text Database Information and Technology, vol. 2010, no. 05, 10 May 2010 (2010-05-10), pages 1-57, XP009512866, ISSN: 1674-0246
- HAMALAINEN T ET AL: "TUTNC: a general purpose parallel computer for neural network computations", MICROPROCESSORS AND MICROSYSTEMS, IPC BUSINESS PRESS LTD. LONDON, GB, vol. 19, no. 8, 1 October 1995 (1995-10-01), pages 447-465, XP004032581, ISSN: 0141-9331, DOI: 10.1016/0141-9331(96)82010-2
- KLAPURI H ET AL: "MAPPING ARTIFICIAL NEURAL NETWORKS TO A TREE SHAPE NEUROCOMPUTER", MICROPROCESSORS AND MICROSYSTEMS, IPC BUSINESS PRESS LTD. LONDON, GB, vol. 20, no. 5, 1 September 1996 (1996-09-01), pages 267-276, XP000639808, ISSN: 0141-9331, DOI: 10.1016/0141-9331(96)01091-5

## Description

### TECHNICAL FIELD

The present disclosure generally relates to a device configured to perform a forward operation of an artificial neural network, as well as a method for performing a forward operation of a single-layer artificial neural network.

### BACKGROUND

A multilayer artificial neural network is widely applied to various fields, for example mode identification, image processing, function approximation, and calculation optimization. It is recently receiving more and more attention from academic and industrial communities due to high identification accuracy and fine parallelizability. WO 2016/037351 A1, and ZhouHan Lin ET AL: "Neural Networks with Few Multiplications", (CORR(ARXIV), vol. 1510.03009v3, 26 February 2016 (2016-02-26), pages 1-9), relate to neural networks trainings. HAMALAINEN T ET AL: "TUTNC: a general purpose parallel computer for neural network computations", (MICROPROCESSORS AND MICROSYSTEMS, IPC BUSINESS PRESS LTD. LONDON, GB, vol. 19, no. 8, 1 October 1995 (1995-10-01), pages 447-465) and KLAPURI H ET AL: "MAPPING ARTIFICIAL NEURAL NETWORKS TO A TREE SHAPE NEUROCOMPUTER", (MICROPROCESSORS AND MICROSYSTEMS, IPC BUSINESS PRESS LTD. LONDON, GB, vol. 20, no. 5, 1 September 1996 (1996-09-01), pages 267-276) relate to a tree shape computer for processing neural networks.

A known method supporting the forward operation of the multilayer artificial neural network is using a general-purpose processor. This method supports the algorithm by means of using a general register file and a general functional component to execute general instructions. Another known method supporting the forward operation of the multilayer artificial neural network is using a graphic processing unit (GPU). This method supports the algorithm by means of using the general register file and a general stream processing unit to execute the general SIMD instructions.

Such two devices use the successive data for data storage and calculation. The storage of the successive data requires more resources, for example, the storage of a 32-bit floating-point datum requires 32 bits. Functional components, for example an adder and a multiplier, required for successive data calculation are relatively complex to achieve.

The discrete data representation refers to a storage manner of replacing the successive data with specified numbers. For example, four numbers, 00, 01, 10, and 11, may represent four numbers, -1, -1/8, 1/8, and 1, respectively. Such a storage manner is different from a successive storage manner. In the successive storage manner, binary numbers, 00/01/10/11, represent four successive decimal numbers, 0/1/2/3. By means of such a representation manner similar to an index, non-successive discrete real data are replaced with formally successive numbers. The stored numbers are not successive, and thus it is called as the discrete data representation.

A method adopted by a prior operating device configured to operate the multilayer artificial neural network for data representation is using successive data representation, for example floating-point data representation or fixed-point data representation. Since the multilayer neural network has a large quantity of high accurate weights, the successive data representation causes higher consumption in operation and storage. However, by means of the discrete data representation, the operations of the successive data, for example the multiplication operation may be replaced with the bitwise operations of the data, for example the exclusive-OR operation and the arithmetic shift operation, thereby greatly reducing the number of the multiplier components. Furthermore, the use of several-bit discrete data is significantly advantageous in storage, compared to traditional 32-bit floating-point data.

### SUMMARY

The invention is defined by the appended claims. According to an aspect of the present disclosure, a device configured to perform a forward operation of an artificial neural network supporting discrete data representation is provided, and includes an instruction caching unit, a controller unit, a data access unit, an interconnecting module, a primary operating module, and a plurality of secondary operating modules.

The instruction caching unit is configured to read an instruction via the data access unit and cache the read instruction.

The controller unit is configured to read the instruction from the instruction caching unit, and decode the instruction into microinstructions configured to control operations of the interconnecting module, the primary operating module, and the secondary operating modules.

The data access unit is configured to read discrete data or successive data from an external address space and write in corresponding data caching units of the primary operating module and the secondary operating modules, or read the discrete data or the successive data from the data caching units and write in the external address space.

When each layer in the artificial neural network starts the forward operation, the primary operating module transmits a discrete or successive input neuron vector of the layer to all the secondary operating modules via the interconnecting module, and after the secondary operating modules finish calculations, the interconnecting module combines discrete or successive output neuron values of the secondary operating modules into an intermediate result vector stage by stage, wherein when input data are mixed data including the discrete data and the successive data, the secondary operating modules adopt preset corresponding calculations for different discrete data.

The primary operating module is configured to perform subsequent calculations using the intermediate result vector, wherein when the input data are the mixed data including the discrete data and the successive data, the primary operating module adopts preset corresponding calculations for different discrete data.

The discrete data representation refers to a representation of replacing real successive data with specified discrete data.

Optionally, the plurality of the secondary operating modules are configured to use the same discrete or successive input neuron vector and respective different discrete or successive weight vectors to calculate respective discrete or successive output neuron values in parallel.

Optionally, the primary operating module performs any one of following operations on the intermediate result vector:
an biasing operation configured to add bias to the intermediate result vector;
an activating operation configured to activate the intermediate result vector, wherein an activation function is a linear function or one of a sigmoid function, a tanh function, a relu function, and a softmax function;
a sampling operation configured to compare the intermediate result vector with a random number, and output 1 when the intermediate result vector is greater than the random number, otherwise output 0 when the intermediate result vector is less than the random number; and
a pooling operation including maxpooling or avgpooling.

The secondary operating module includes an input neuron caching unit configured to cache the discrete or successive input neuron vector.

The interconnecting module forms a data path for the successive or discrete data between the primary operating module and the plurality of the secondary operating modules, and implements an H-tree structure. The H-tree structure is a binary tree path formed by a plurality of nodes, and each node transmits upstream discrete or successive data to two downstream nodes, combines the discrete or successive data returned from the two downstream nodes, and returns to the upstream node.

The primary operating module includes an operating unit, a data dependency relationship determining unit, and a neuron caching unit.

The neuron caching unit is configured to cache the input data and the output data discretely or successively represented and used by the primary operating module in a calculation process.

The operating unit performs various operating functions of the primary operating module. When the input data are the mixed data including the discrete data and the successive data, preset corresponding calculations are adopted for the different discrete data.

The data dependency relationship determining unit is a port for the operating unit to read from and write in the neuron caching unit, ensures that the successive data or the discrete data in the neuron caching unit do not have reading and writing consistency violation, and reads the discrete or successive input neuron vector from the neuron caching unit, transmits to the secondary operating modules via the interconnecting module.

The intermediate result vector from the interconnecting module is transmitted to the operating unit.

Each secondary operating module includes an operating unit, a data dependency relationship determining unit, a neuron caching unit, and a weight caching unit.

The operating unit is configured to receive the microinstructions transmitted by the controller unit and perform arithmetic logic operations. When the input data are the mixed data including the discrete data and the successive data, preset corresponding calculations are adopted for the different discrete data.

The data dependency relationship determining unit is configured to perform reading and writing operations on the neuron caching unit supporting the discrete data representation and the weight caching unit supporting the discrete data representation in a calculation process, and ensure the neuron caching unit supporting the discrete data representation and the weight caching unit supporting the discrete data representation do not have reading and writing consistency violation.

The neuron caching unit is configured to cache data of the input neuron vector and the output neuron value calculated by the secondary operating module.

The weight caching unit is configured to cache a weight vector discretely or successively represented and required by the secondary operating module in a calculation process.

The data dependency relationship determining unit ensures the reading and writing consistency violation by means of determining whether data of microinstructions not executed have a dependency relationship to data of microinstructions being executed. When the data of the microinstructions not executed do not have the dependency relationship to the data of the microinstructions being executed, the microinstructions are allowed to be transmitted immediately, otherwise the microinstructions not executed are not allowed to be transmitted until all the microinstructions depended on by the microinstructions not executed are executed.

The operating unit in the primary operating module or the secondary operating module includes an operation determining unit and a mixed data operating unit; when the input data are the mixed data, the operation determining unit determines which operation is performed on the mixed data according to the discrete data included in the mixed data, and then, the mixed data operating unit performs corresponding operations according to a result determined by the operation determining unit.

Optionally, the operating unit in the primary operating module or the secondary operating module further includes a data type determining unit and at least one of a discrete data operating unit and a successive data operating unit. When the input data are merely the discrete data, the discrete data operating unit performs corresponding operations by table look-up according to the input discrete data. When the input data are merely the successive data, the successive data operating unit performs corresponding operations.

Optionally, the device further includes a converting module. The converting module includes a pre-processing unit, a distance calculating unit, and a determining unit. Here, it is assumed that M discrete data are used where M=2^{m}, m≥1, and the discrete data correspond to M values in a preset interval [-zone, zone], respectively. The pre-processing unit performs a clip(-zone, zone) operation on an input successive datum x, and obtains a pre-processed datum y in the interval [-zone, zone]. if x≤-zone, then y=-zone; if x≥zone, then y=zone; and if -zone<x<zone, then y=x. The distance calculating unit calculates distances between the pre-processed datum y and the M discrete data. The determining unit calculates discrete data based on the distances and outputs the discrete data.

Optionally, the preset interval [-zone, zone] is [-1, 1] or [-2, 2]. Or absolute values of the M values are reciprocals of powers of 2. Or the determining unit outputs a discrete datum corresponding to a value least distant from the pre-processed datum y, and when two values are identically distant from the pre-processed datum y, the determining unit outputs a discrete datum corresponding to any one of the two values; or the determining unit calculates a normalization probability from the pre-processed datum y to any one of two least distant values, compares the normalization probability corresponding to the any one of two values to a random number ranging from 0 to 1 generated by a random number generating unit, and outputs the discrete datum when the random number z is less than the probability, otherwise outputs another discrete datum.

According to another aspect of the present disclosure, a method for performing a forward operation of a single-layer artificial neural network by means of using the aforementioned device is provided. According to the provided instruction set, the controller controls reading the data required by the operation, such as neurons, weights, constants. These data may be represented by the discrete data or not. Then, the primary operating module, the secondary operating modules, and the interconnecting module perform a multiplication operation, an addition operation, a biasing operation, and an activating operation on the neuron data and the weight data. Specially, when a multiplication operation is performed on the data represented by the discrete data, the multiplication operation may be replaced with bitwise operations performed on related data according to the values of the discrete data. For example, when the weight data are represented by 1-bit discrete data, 0 represents +1 and 1 represents -1. The multiplication operation on the weights is achieved by means of the exclusive-OR operation performed on the sign bit of the data multiplied by the weights.

According to yet another aspect of the present disclosure, a method for using the aforementioned device to support a batch normalization operation of the artificial neural network is provided. According to the provided instruction set, the controller controls the data access unit reading the input data, then controls the primary and secondary operating modules calculating a mean value and a variance of each location according to the size of the batch or uses a preset mean value and a preset variance. Then, the controller subtracts the mean value from an input data of the corresponding location and divides by the variance. Finally, the controller multiplies the processed data by a learning parameter and adds another learning parameter.

According to still another aspect of the present disclosure, a method for performing a forward operation of a multilayer artificial neural network by means of using the aforementioned device is provided. The achieving process thereof is similar to that of the single-layer neural network. After a first layer in the artificial neural network finishes the operation, the operation instruction of a second layer uses the output neuron address of the first layer stored in the primary operating module as an input neuron address of the second layer. Likewise, the weight address and the biasing address in the instruction are changed to the addresses corresponding to the second layer.

### BRIEF DESCRIPTION OF THE DRAWINGS

In order to fully understand the present disclosure and advantages thereof, a following description in conjunction with accompanying drawings is made a reference to.
Fig. 1 illustrates an exemplary block diagram of an overall structure of a device configured to perform a forward operation of an artificial neural network supporting discrete data representation according to an implementation of the present disclosure.
Fig. 2 schematically illustrates a structure of an H-tree module (an implementation of an interconnecting module) in the device configured to perform the forward operation of the artificial neural network supporting the discrete data representation according to an implementation of the present disclosure.
Fig. 3 illustrates an exemplary block diagram of a structure of a primary operating module in the device configured to perform the forward operation of the artificial neural network supporting the discrete data representation according to an implementation of the present disclosure.
Fig. 4 illustrates an exemplary block diagram of a structure of a secondary operating module in the device configured to perform the forward operation of the artificial neural network supporting the discrete data representation according to an implementation of the present disclosure.
Fig. 5 illustrates an exemplary block diagram of a process of the forward operation of the neural network according to an implementation of the present disclosure.
Fig. 6 illustrates an exemplary block diagram of a process of the forward operation of the neural network supporting the discrete data representation according to an implementation of the present disclosure.
Fig. 7 illustrates a flowchart of an operation of a single-layer artificial neural network according to an implementation of the present disclosure.
Fig. 8 illustrates an exemplary structure of an operating unit according to an implementation of the present disclosure.
Fig. 9 illustrates an exemplary structure of a converting module configured to perform conversion of successive data into discrete data according to an implementation of the present disclosure.

Identical devices, components, and units are denoted by identical reference numerals throughout the accompanying drawings.

### DETAILED DESCRIPTION

Other aspects, advantages, and prominent features of the present disclosure will become apparent to persons skilled in the art from the following detailed description of exemplary implementations of the present disclosure in conjunction with the accompanying drawings.

In the present disclosure, the terms "include" , "comprise" , and derivatives thereof are inclusive, not limitative. The term "or" is inclusive, and means "and/or".

In the description, various implementations used to describe principles of the present disclosure are merely illustrative, and should not be construed as a limit to the scope of the present disclosure in any ways. The following description with reference to the accompanying drawings is used to assist in fully understanding the exemplary implementations of the present disclosure limited by claims and equivalents thereof. The description includes various specific details to assist in understanding, but these details should be regarded as merely exemplary. Thus, it should be appreciated by persons skilled in the art that various changes and modifications may be made to the implementations described herein without departing from the scope of the present disclosure Furthermore, descriptions for well-known functions and structures are omitted for clarity and conciseness. In addition, similar reference numerals are used to denote similar functions and operations throughout the accompanying drawings.

A forward operation of a multilayer artificial neural network supporting discrete data representation according to an implementation of the present disclosure includes two or more layers of neurons. For each layer, a dot product operation is first performed on an input neuron vector and a weight vector, and consequently an output neuron is obtained by an activation function. The activation function may be a nonlinear function supporting discrete representation or successive representation of an activated output neuron, for example a sigmoid function, a tanh function, a relu function, and a softmax function. In another implementation, the activation function may also be a linear function.

For the dot product operation of the input neuron vector represented by discrete data or the weight vector represented by discrete data, the present device supports conversion of the dot product operation into a bitwise operation of the data, for example an arithmetic shift operation, a NOT operation, an exclusive-OR operation. For the representation of the data, the present device supports the discrete representation or non-discrete representation of the data. A user may customize which data of which layer adopt the discrete representation or non-discrete representation, and may customize the number of bits of the discrete data according to specific requirements, thereby replacing the number of represented real data. For example, 1-bit, 2-bit, or 3-bit discrete data may represent 2, 4, or 8 real data, respectively.

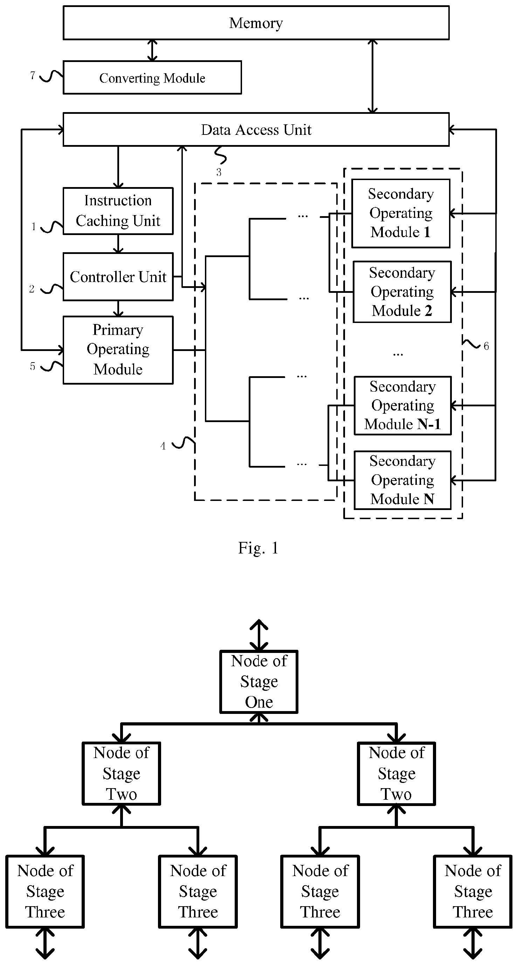

Fig. 1 illustrates an exemplary block diagram of an overall structure of a device configured to perform the forward operation of the artificial neural network supporting the discrete data representation according to an implementation of the present disclosure. As illustrated in Fig. 1, the device includes an instruction caching unit 1, a controller unit 2, a data access unit 3, an interconnecting module 4, a primary operating module 5, and a plurality of secondary operating modules 6, and optionally includes a converting module 7. The instruction caching unit 1, the controller unit 2, the data access unit 3, the interconnecting module 4, the primary operating module 5, the secondary operating modules 6, and the converting module 7 may be achieved by hardware circuits (for example, including but not limited to FPGAs, CGRAs, ASICs, analog circuits, and memristors). In particular, the present device may support storage and operations of the discrete data.

The instruction caching unit 1 is configured to read an instruction via the data access unit 3 and cache the read instruction.

The controller unit 2 is configured to read the instruction from the instruction caching unit 1, and decode the instruction into microinstructions configured to control operations of other modules. The other modules are the data access unit 3, the primary operating module 5, and the secondary operating modules 6.

The data access unit 3 is configured to access an external address space and directly read the data from and write the data in each caching unit in the device to load and store the data. The data is discretely or non-discretely represented. The unit is designed to be capable of reading the data discretely represented.

The interconnecting module 4 is configured to interconnect the primary operating module and the secondary operating modules.

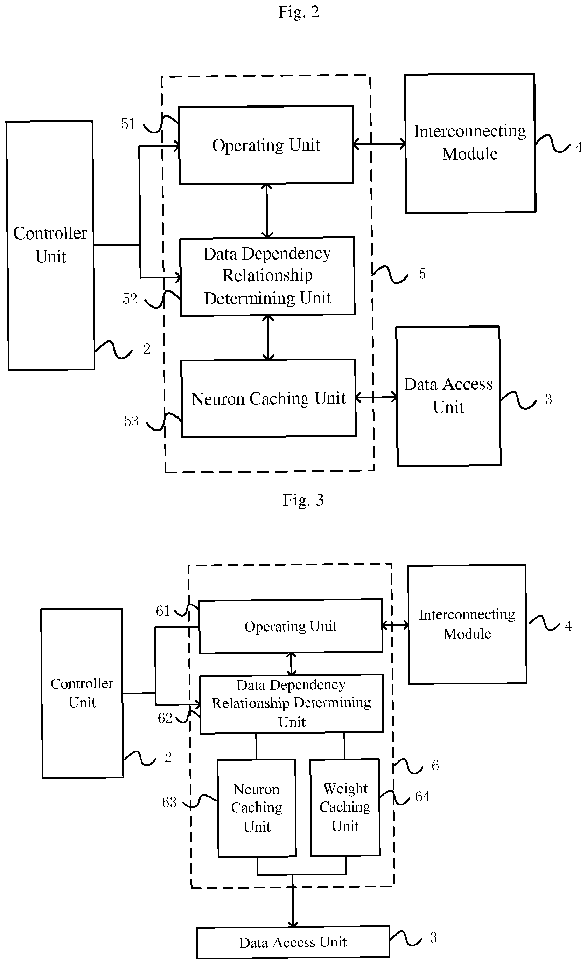

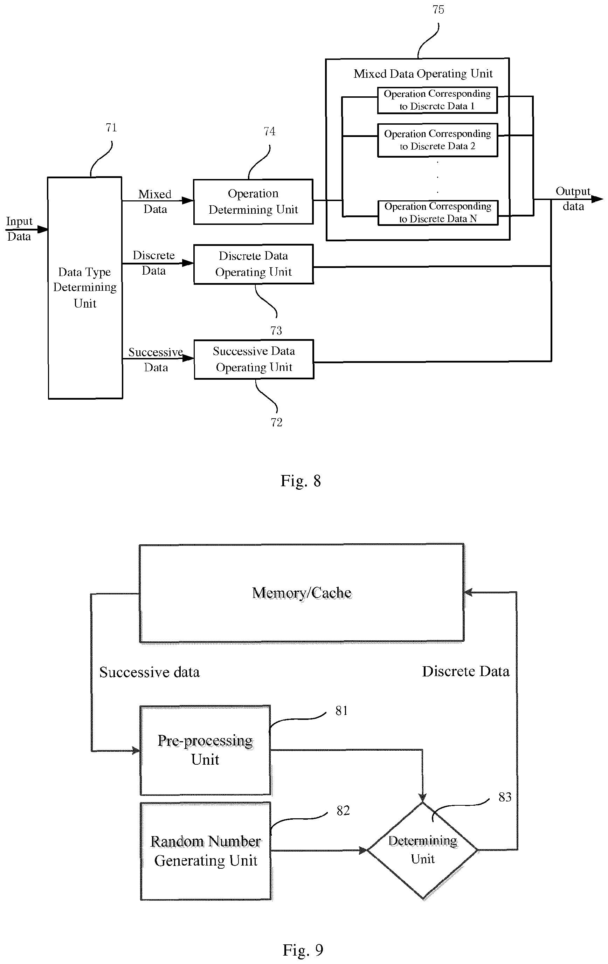

Fig. 2 schematically illustrates an implementation of the interconnecting module 4: an H-tree module. The H-tree module 4 forms a data path between the primary operating module 5 and the plurality of secondary operating modules 6, and has an H-tree structure. The H-tree structure is a binary tree path formed by a plurality of nodes, and each node transmits upstream data to two downstream nodes, or combines data returned from the two downstream nodes, and returns to the upstream node. For example, when each layer in the artificial neural network starts operation, neuron data in the primary operating module 5 which may be discretely or non-discretely represented are transmitted to each secondary operating module 6 via the H-tree module 4. After the secondary operating modules 6 finish calculations, neuron values output by the secondary operating modules are combined stage by stage into a complete vector constituted by the neurons as an intermediate result vector in the H-tree structure. For an operation for the discrete data representation, an operating module dedicated to discrete data operation in the primary and secondary operating modules is specifically illustrated in Fig. 8. Taking a fully connected layer of the neural network for example, if the device includes N secondary operating modules, then the intermediate result vector is divided into sections according to N, and each section includes N elements. The i-th secondary operating module calculates the i-th element in each section. The N elements are combined into a vector in the H-tree structure, and the vector has a length of N and is returned to the primary operating module. Thus, if the network merely has N output neurons, then each secondary operating module merely need to output a value of a single neuron; if the network has m^{∗}N output neurons, then each secondary operating module merely need to output values of m neurons. The H-tree module supports the discrete data representation in processes of storing and transmitting the data.

Fig. 3 illustrates a block diagram of a structure of the primary operating module 5 in the device configured to perform the forward operation of the artificial neural network according to an implementation of the present disclosure. As illustrated in Fig. 3, the primary operating module 5 includes an operating unit 51, a data dependency relationship determining unit 52, and a neuron caching unit 53 supporting the discrete data representation.

The neuron caching unit 53 supporting the discrete data representation is configured to cache the input data and the output data used by the primary operating module 5 in a calculation process.

The operating unit 51 performs various operating functions of the primary operating module 5. When operation factors are merely the discrete data, an addition operation, a subtraction operation, a multiplication operation, and a division operation of the discrete data may be achieved by table look-up. For example, a 2-bit discrete datum may represent 4 successive data which may produce 4^{∗}4=16 combinations. For each of the addition operation, the subtraction operation, the multiplication operation, and the division operation, a 4^{∗}4 index table may be prepared and maintained, and a corresponding calculated value may be found from the index table. 4 kinds of operations require four 4^{∗}4 index tables in total.

When the operation factors includes the discrete data and the successive data, corresponding bitwise operations may be preset for the addition operations, the subtraction operations, the multiplication operations, and the division operations of different discrete data. The dot product operation of the discrete data and the successive data may be replaced by means of performing a bitwise exclusive-OR operation, multiplying by a corresponding power of 2, and performing an accumulation and summation. In the case of the multiplication operations, if some of multiplication factor data are discretely represented, then corresponding operations (for example, bitwise exclusive-OR operations, NOT operations, arithmetic shift operations operated on the corresponding data) are indexed by the discrete data to replace the multiplication operations on the successive data represented by the discrete data, thereby reducing the number of the multiplier components. For example, in the case of a multiplication operation of a successive datum and a discrete datum, multiplying -1/2 by 16, a traditional multiplier component may multiply -1/2 directly by 16. In the operating unit 51, the likelihood of the discrete data is low, and thus the function of the operating unit may be replaced with an on/off determining method, such as searching an index. For example, the discrete data representation for -1/2 may be defined as 01, and if an operation factor is -1/2, then a discrete datum received by the operating unit 51 is 01. The operating unit 51 performs an operation corresponding to the discrete datum 01. The sign bit of a 8-bit fixed-point datum 00010000 representing 16 is inverted, and then the 8-bit fixed-point datum is arithmetically shifted to the right by 1 bit to obtain 10001000 which represents -8 in the decimal system. In the case of a division operation, dividing 16 by -2, where 16 is a successive datum and -2 is a discrete datum, if the binary representation for the discrete datum -2 is defined as 10, then the operating unit performs a division operation corresponding to the discrete datum 10. The 8-bit fixed-point datum 00010000 representing 16 is arithmetically shifted to the right by 1 bit, and then the sign bit thereof is inverted to obtain 10001000 which represents -8 in the decimal system as a result. The addition operation and the subtraction operation are similar to the aforementioned processes. According to the binary representation for the discrete data as an index, the bitwise arithmetic left shift operations, arithmetic right shift operations, exclusive-OR operations, and the like are indexed. By means of the operations, the addition operations and the subtraction operations on the real data represented by the discrete data are achieved.

The data dependency relationship determining unit 52 is a port for the operating unit 51 to read from and write in the neuron caching unit 53, and can ensure reading and writing consistency of the data in the neuron caching unit. Moreover, the data dependency relationship determining unit 52 is also configured to transmit the read data to the secondary operating modules via the interconnecting module 4, and the data output by the secondary operating modules 6 are directly transmitted to the operating unit 51 via the interconnecting module 4. The instruction output by the controller unit 2 is transmitted to the operating unit 51 and the data dependency relationship determining unit 52, to control their actions.

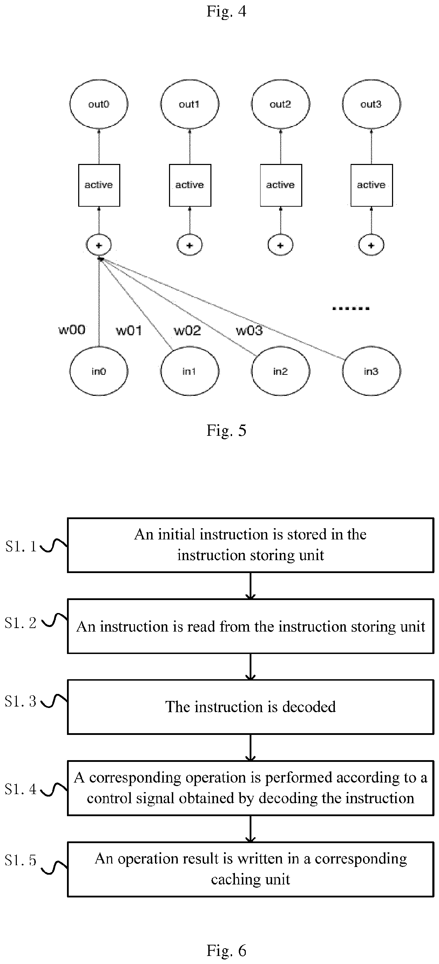

Fig. 4 illustrates an exemplary block diagram of a structure of one secondary operating module 6 in the device configured to perform the forward operation of the artificial neural network supporting the discrete data representation according to an implementation of the present disclosure. As illustrated in Fig. 4, each secondary operating module 6 includes an operating unit 61, a data dependency relationship determining unit 62, a neuron caching unit 63 supporting the discrete data representation, and a weight caching unit 64 supporting the discrete data representation.

The operating unit 61 is configured to receive the microinstructions transmitted by the controller unit 2 and perform arithmetic logic operations. When the operation factors are merely the discrete data, the addition operation, the subtraction operation, the multiplication operation, and the division operation of the discrete data may be achieved by table look-up. For example, a 2-bit discrete datum may represent 4 successive data which may produce 4^{∗}4=16 combinations. For each of the addition operation, the subtraction operation, the multiplication operation, and the division operation, a 4^{∗}4 index table may be prepared and maintained, and a corresponding calculated value may be found from the index table. 4 kinds of operations require four 4^{∗}4 index tables in total.

When the operation factors includes the discrete data and the successive data, corresponding bitwise operations are preset for the addition operations, the subtraction operations, the multiplication operations, and the division operations of different discrete data. For example, the dot product operation of the discrete data and the successive data is replaced by means of performing a bitwise exclusive-OR operation, multiplying by a corresponding power of 2, and performing an accumulation and summation. For example, in the case of the multiplication operations, if some of multiplication factor data are discretely represented, then corresponding operations (for example, bitwise exclusive-OR operations, NOT operations, arithmetic shift operations operated on the corresponding data) are indexed by the discrete data to replace the multiplication operations on the successive data represented by the discrete data, thereby reducing the number of the multiplier components. For example, in the case of a multiplication operation of a successive datum and a discrete datum, multiplying -1/2 by 16, a traditional multiplier component may multiply -1/2 directly by 16. In the operating unit 51, the likelihood of the discrete data is low, and thus the function of the operating unit may be replaced with an on/off determining method, such as searching an index. For example, the discrete data representation for -1/2 may be defined as 01, and if an operation factor is -1/2, then a discrete datum received by the operating unit 51 is 01. The operating unit 51 performs an operation corresponding to the discrete datum 01. The sign bit of a 8-bit fixed-point datum 00010000 representing 16 is inverted, and then the 8-bit fixed-point datum is arithmetically shifted to the right by 1 bit to obtain 10001000 which represents -8 in the decimal system. In the case of a division operation, dividing 16 by -2, where 16 is a successive datum and -2 is a discrete datum, if the binary representation for the discrete datum -2 is defined as 10, then the operating unit performs a division operation corresponding to the discrete datum 10. The 8-bit fixed-point datum 00010000 representing 16 is arithmetically shifted to the right by 1 bit, and then the sign bit thereof is inverted to obtain 10001000 which represents -8 in the decimal system as a result. The addition operation and the subtraction operation are similar to the aforementioned processes. According to the binary representation for the discrete data as an index, the bitwise arithmetic left shift operations, arithmetic right shift operations, exclusive-OR operations, and the like are indexed. By means of the operations, the addition operations and the subtraction operations on the real data represented by the discrete data are achieved.

The data dependency relationship determining unit 62 is configured to perform reading and writing operations on the neuron caching unit in a calculation process. The data dependency relationship determining unit 62 ensures the data used by the instructions do not have reading and writing consistency violation before the read and write operations are performed. For example, all the microinstructions transmitted to the data dependency relationship determining unit 62 may be stored in an instruction queue in the data dependency relationship determining unit 62. In this queue, if a scope of data read by a reading instruction conflicts with a scope of data written by a writing instruction which is previous in the queue, then the reading instruction may not be executed until the writing instruction depended on is executed.

The neuron caching unit 63 supporting the discrete data representation is configured to cache the data of the input neuron vector and the output neuron value of the secondary operating module 6. The data may be stored and transmitted in the form of discrete data.

The weight caching unit 64 supporting the discrete data representation is configured to cache weight data required by the secondary operating module 6 in a calculation process. The weight data may be discretely represented or not, depending on user definition. Each secondary operating module 6 may merely store the weight between all the input neurons and a part of the output neurons. Taking the fully connected layer for example, the output neuron is divided into sections according to the number N of the secondary operating modules, the weight corresponding to the n-th output neuron in each section is stored in the n-th secondary operating module.

The secondary operating modules 6 achieve the former half of a process of the forward operation of each layer in the artificial neural network which may be performed in parallel. The data storage and operation in this module support the discrete data representation. Taking the fully connected layer (multi-layer perceptron, MLP) of the artificial neural network for example, the equation is y=f(wx+b), where a multiplication of a weight matrix w and an input neuron vector x may be divided into parallel calculation sub-tasks unrelated to each other, and the output neuron vector and the input neuron vector are row vectors. Each secondary operating module 6 merely calculates a product of a corresponding part of scalar elements in the input neuron vector and a row corresponding to the weight matrix w, and each obtained output vector is a partial sum to be accumulated into a final result. These partial sums are added together in pairs stage by stage in the interconnecting module 4 to obtain the final result. This result may be represented by the discrete data. Therefore, the calculation process is changed into parallel processes of calculating the partial sums and a subsequent accumulating process. Each secondary operating module 6 calculates the output neuron value, and all the output neuron values are combined into the intermediate result vector in the interconnecting module 4. Each secondary operating module 6 merely needs to calculate the output neuron value in the intermediate result vector y corresponding to the module. The interconnecting module 4 sums the neuron values output by all the secondary operating modules 6, to obtain the final intermediate result vector y. The primary operating module 5 performs subsequent operations based on the intermediate result vector y, for example, biasing, pooling (for example, maxpooling or avgpooling), activating, sampling, and the like.

Fig. 8 illustrates a structural block diagram of an operating unit which may be used as the operating unit 51 in the primary operating module or the operating unit 61 in the secondary operating module. The data input in the operation process may be the discrete data or the successive data. A data type determining unit 71 is configured to determine whether the input data are merely the successive data, or merely the discrete data, or mixed data including the successive data and the discrete data. When the input data are merely the successive data, a successive data operating unit 72 performs corresponding operations.

When the input data are merely the discrete data, a discrete data operating unit 73 performs corresponding operations. When the operation factors are merely the discrete data, the addition operation, the subtraction operation, the multiplication operation, and the division operation of the discrete data may be achieved by table look-up. For example, a 2-bit discrete datum may represent 4 successive data which may produce 4^{∗}4=16 combinations. For each of the addition operation, the subtraction operation, the multiplication operation, and the division operation, a 4^{∗}4 index table may be prepared and maintained, and a corresponding calculated value may be found from the index table. 4 kinds of operations require four 4^{∗}4 index tables in total.

When the input data are the mixed data, an operation determining unit 74 determines which operation is performed according to the discrete data included in the mixed data. Corresponding operations are preset for different discrete data, respectively. Then, a mixed data operating unit 75 performs corresponding operations according to a result determined by the operation determining unit 74. When the operation factors includes the discrete data and the successive data, corresponding bitwise operations are preset for the addition operations, the subtraction operations, the multiplication operations, and the division operations of different discrete data. For example, the dot product operation of the discrete data and the successive data is replaced by means of performing a bitwise exclusive-OR operation, multiplying by a corresponding power of 2, and performing an accumulation and summation. For example, in the case of the multiplication operations, if some of multiplication factor data are discretely represented, then corresponding operations (for example, bitwise exclusive-OR operations, NOT operations, arithmetic shift operations operated on the corresponding data) are indexed by the discrete data to replace the multiplication operations on the successive data represented by the discrete data, thereby reducing the number of the multiplier components. For example, in the case of a multiplication operation of a successive datum and a discrete datum, multiplying -1/2 by 16, a traditional multiplier component may multiply -1/2 directly by 16. In the operating unit 51, the likelihood of the discrete data is low, and thus the function of the operating unit may be replaced with an on/off determining method, such as searching an index. For example, the discrete data representation for -1/2 may be defined as 01, and if an operation factor is -1/2, then a discrete datum received by the operating unit 51 is 01. The operating unit 51 performs an operation corresponding to the discrete datum 01. The sign bit of a 8-bit fixed-point datum 00010000 representing 16 is inverted, and then the 8-bit fixed-point datum is arithmetically shifted to the right by 1 bit to obtain 10001000 which represents -8 in the decimal system. In the case of a division operation, dividing 16 by -2, where 16 is a successive datum and -2 is a discrete datum, if the binary representation for the discrete datum -2 is defined as 10, then the operating unit performs a division operation corresponding to the discrete datum 10. The 8-bit fixed-point datum 00010000 representing 16 is arithmetically shifted to the right by 1 bit, and then the sign bit thereof is inverted to obtain 10001000 which represents -8 in the decimal system as a result. The addition operation and the subtraction operation are similar to the aforementioned processes. According to the binary representation for the discrete data as an index, the bitwise arithmetic left shift operations, arithmetic right shift operations, exclusive-OR operations, and the like are indexed. By means of the operations, the addition operations and the subtraction operations on the real data represented by the discrete data are achieved.

Fig. 9 illustrates the converting module. The user may determine whether to adopt this module to convert the successive data into the discrete data or not. The successive data are input, and the discrete data are output. This module includes a random number generating unit, a determining unit, and an operating unit. The operating unit performs an operation on the input successive data to obtain a calculated result, and the determining unit compares a random number with the calculated result to determine which interval the random number is within, so as to determine the specific values of the output discrete data. For example, binary discrete data are generated according to user definition. For any input successive datum x, a result y=abs(clip(-1,1)) are calculated by the operating unit. Then, the determining unit determines the output discrete datum is 1 when the random number is greater than y, otherwise determines the output discrete datum is 0. The discrete data 1 and 0 represents the successive data -1 and +1, respectively. The obtained discrete data are stored in the memory to be used by the operating units in the primary and secondary operating modules so as to cause corresponding operations.

The weight data, the output data, and the input data in the process of the forward operation may be represented by the discrete data or not. The multiplication operation on the successive data may be replaced with the exclusive-OR operation, the NOT operation, the arithmetic shift operation, etc., based on the discrete data. For example, when the weights are represented by 1-bit discrete data, 0 represents +1 and 1 represents -1. The multiplication operation on the weights is achieved by means of the exclusive-OR operation performed on the sign bit of the data multiplied by the weights.

An instruction set configured to perform the forward operation of the artificial neural network in the aforementioned device is provided according to an implementation of the present disclosure. The instruction set includes a CONFIG instruction, a COMPUTE instruction, an IO instruction, a NOP instruction, a JUMP instruction, a MOVE instruction, and the like.

The CONFIG instruction is configured to, before each layer in the artificial neural network starts the operation, set various constants required by the operation of the layer.

The COMPUTE instruction is configured to perform the arithmetic logic operations of each layer in the artificial neural network.

The IO instruction is configured to read the input data required by the operation from the external address space and write the data into the external address space after the operation. The data supports the discrete representation.

The NOP instruction is configured to clear the microinstructions in all the microinstruction caching queues in the device, to ensure that all the instructions before the NOP instruction are completely executed. The NOP instruction does not include any operations.

The JUMP instruction is configured to perform a jump to the address of the next instruction to be read from the instruction caching unit by the controller, to achieve a jump of a controlling flow.

The MOVE instruction is configured to move the data at a certain address in an internal address space of the device to another address in the internal address space of the device. The instruction is independent of the operating unit, and does not occupy resources of the operating unit when it is executed.

Fig. 5 illustrates an exemplary block diagram of a process of the forward operation of the neural network according to an implementation of the present disclosure. In the secondary operating modules 6, dot product operations are performed on the input neuron vector and the weight vectors in the secondary operating modules 6, respectively, to obtain corresponding output neuron values which are all combined into an intermediate result vector. After a biasing vector is added to the intermediate result vector and an activating operation is performed on it, a final output neuron vector of the layer of the neural network is obtained. The equation is expressed as out=f (w^{∗}in+b), where out represents an output neuron vector, in represents an input neuron vector, b represents a biasing vector, w represents a weight matrix, and f represents an activation function. The weight vector in each secondary operating module 6 is a row vector in the weight matrix corresponding to the secondary operating module 6. The interconnecting module transmits the input neuron vector [in0, •••, inN] to all the secondary operating modules, and temporarily stores in the neuron caching units. The i-th secondary operating module calculates a dot product of the corresponding weight vector [w_i0, •••, w_iN] and the input neuron vector. The results output by the secondary operating modules are combined into a complete output vector through the interconnecting module, and the output vector is returned to the primary operating module. The activating operation is performed in the primary operating module, to obtain the final output neuron vector [out0, out1, out2, •••, outN].

Fig. 6 illustrates a method for implementing a forward operation of a single-layer artificial neural network supporting the discrete data representation according to an implementation. This flowchart describes a process of achieving the forward operation of the single-layer artificial neural network supporting the discrete data representation as illustrated in Fig. 5 by means of using the device and the instruction set according to the present disclosure.

At step S1.1, an initial instruction is stored in the instruction storing unit 1.

At step SI.2, an instruction is read from the instruction storing unit 1.

At step S1.3, the instruction is decoded.

At step S1.4, a corresponding operation is performed according to a control signal obtained by decoding the instruction.

At step S1.5, an operation result is written in a corresponding caching unit.

At step S1.1, an initialized IO instruction for moving subsequent instructions may be stored.

At step S1.2, the read instruction may include, but not be limited to, the CONFIG instruction, the COMPUTE instruction, the IO instruction, the NOP instruction, the JUMP instruction, the MOVE instruction, and the like.

At step S1.3, the control signal for a corresponding module is obtained by decoding according to an operation type of the instruction (CONFIG, COMPUTE, IO, NOP, JUMP, MOVE, and the like). The CONFIG instruction is decoded to obtain configuration information for other modules. The COMPUTE instruction is decoded into control signals for the primary and secondary operating modules which control various discrete data to perform corresponding operations. The IO instruction is decoded to obtain a control signal for the data access module. The NOP instruction does not produce any actual control signals, and is merely configured to clear the control signals in all the control signal caching queues in the device, to ensure that all the instructions before the NOP instruction are executed. The JUMP instruction is decoded into a control signal for a jump of an instruction flow. The MOVE instruction is decoded to obtain a control signal for moving the data in the device.

At step S1.4, the aforementioned units and modules 2 to 6 perform corresponding operations according to the control signals. Taking the COMPUTE instruction configured to perform the forward operation of the neural network supporting the discrete data representation for example, the interconnecting module transmits the input neuron vector [in0, •••, inN] to all the secondary operating modules, and temporarily caches in the neuron caching units. The i-th secondary operating module calculates a dot product of a corresponding weight vector [w_i0, •••, w_iN] and the input neuron vector. The results output by the secondary operating modules are combined into a complete output vector through the interconnecting module, and the output vector is returned to the primary operating module. The activating operation is performed in the primary operating module, to obtain the final output neuron vector [out0, out1, out2, •••, outN].

At step S1.5, each module writes the operation result in the corresponding caching unit. Taking the forward operation of the neural network supporting the discrete data representation for example, the output neuron vector obtained by the primary operating module is written in the neuron caching unit.

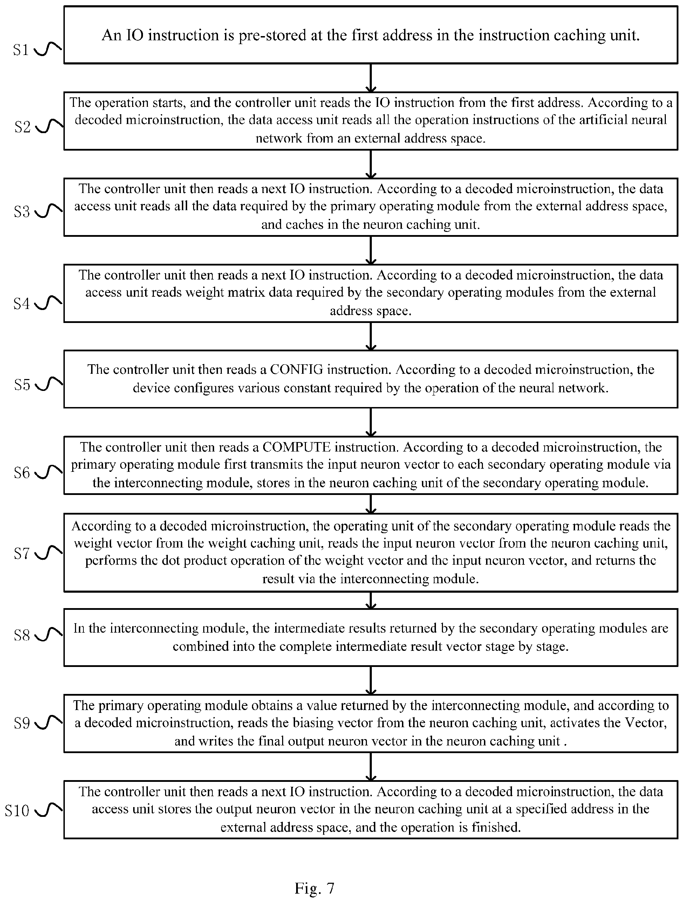

Fig. 7 illustrates another more detailed method for implementing a forward operation of a single-layer artificial neural network according to an implementation. The flowchart describes a process of implementing the forward operation of the single-layer neural network as illustrated in Fig. 5 by means of using the device and the instruction set according to the present disclosure.

At step S1, an IO instruction is pre-stored at the first address in the instruction caching unit 1.

At step S2, the operation starts, and the controller unit 2 reads the IO instruction from the first address in the instruction caching unit 1. According to a decoded microinstruction, the data access unit 3 reads all the corresponding operation instructions of the artificial neural network from an external address space, and caches them in the instruction caching unit 1.

At step S3, the controller unit 2 then reads a next IO instruction from the instruction caching unit. According to a decoded microinstruction, the data access unit 3 reads all the data (for example, including the input neuron vector, interpolation tables, constant tables, bias vectors, and the like) required by the primary operating module 5 from the external address space, and caches in the neuron caching unit 53 of the primary operating module 5. The data supports the discrete representation, and may be all or partially discrete.

At step S4, the controller unit 2 then reads a next IO instruction from the instruction caching unit. According to a decoded microinstruction, the data access unit 3 reads weight matrix data required by the secondary operating modules 6 from the external address space. The data supports the discrete representation, and may be all or partially discrete.

At step S5, the controller unit 2 then reads a CONFIG instruction from the instruction caching unit. According to a decoded microinstruction, the device configures various constant required by the operation of the neural network. For example, the operating unit 51, 61 configures a value of a register in the unit, according to parameters in the microinstruction. The parameters, for example, includes calculation accuracy setting, data of an activation function (for example, calculation accuracy bit of the layer, rang parameters of the algorithm of the Lrn layer, reciprocal of the window size of the algorithm of the AveragePooling layer, and the like).

At step S6, the controller unit 2 then reads a COMPUTE instruction from the instruction caching unit. According to a decoded microinstruction, the primary operating module 5 first transmits the input neuron vector to each secondary operating module 6 via the interconnecting module 4, stores in the neuron caching unit 63 of the secondary operating module 6.

At step S7, according to a microinstruction decoded from the COMPUTE instruction, the operating unit 61 of the secondary operating module 6 reads the weight vector (the row vector in the weight matrix corresponding to the secondary operating module 6) from the weight caching unit 64, reads the input neuron vector from the neuron caching unit, performs the dot product operation of the weight vector and the input neuron vector, and returns the intermediate result via the interconnecting module. For the discrete data, the bitwise operations, such as the exclusive-OR operation, may be customizably used to replace the dot product operation or not. For example, in the case of a 1-bit discrete data representation, 0 represents +1 and 1 represents -1. The multiplication operation on the weight is achieved by means of the exclusive-OR operation performed on the sign bit of the data multiplied by the weight.

At step S8, in the interconnecting module 4, the intermediate results returned by the secondary operating modules 6 are combined into the complete intermediate result vector stage by stage.

At step S9, the primary operating module 5 obtains a value returned by the interconnecting module 4, and according to a microinstruction decoded from the COMPUTE instruction, reads the biasing vector from the neuron caching unit 53, adds to the vector returned from the interconnecting module 4, and then activates the addition result. The device allows the user to customize whether the activated result is discretely represented or not. The final output neuron vector is written in the neuron caching unit 53.

At step S10, the controller unit then reads a next IO instruction from the instruction caching unit. According to a decoded microinstruction, the data access unit 3 stores the output neuron vector in the neuron caching unit 53 at a specified address in the external address space, and the operation is finished.

Steps of a batch normalization of the artificial neural network are similar to those in the aforementioned process. According to the provided instruction set, the controller completes the following process. The controller controls the data access unit reading the input data, then controls the primary and secondary operating modules calculating a mean value and a variance of each location according to the size of the batch or uses a preset mean value and a preset variance. Then, the controller subtracts the mean value from an input datum of the corresponding location and divides by the variance. Finally, the controller multiplies the processed datum by a learning parameter and adds another learning parameter.

The achieving process of the multilayer artificial neural network is similar to that of the single-layer neural network. After a first layer in the artificial neural network finishes the operation, the operation instruction of a second layer uses the output neuron address of the first layer stored in the primary operating module as an input neuron address of the second layer. Likewise, the weight address and the biasing address in the instruction are changed to the addresses corresponding to the second layer.

The present disclosure adopts the device configured to perform the forward operation of the artificial neural network and the instruction set, so as to solve the problems of insufficient operation performance of CPU and GPU, and high consumption in decoding at the front-end, thereby effectively improving the support for the forward operation of the multilayer artificial neural network.

The present disclosure adopts a dedicated on-chip cache for the forward operation of the multilayer artificial neural network to greatly optimize the reuse of the input neuron and the weight data, so as to avoid repeatedly reading these data from the memory, reduce the times of accessing the memory, and prevent the memory bandwidth from becoming a limitation to the performance of the forward operation of the multilayer artificial neural network.

The present disclosure adopts the discrete data representation, and thus greatly reduces consumption, such as storage energy consumption, of the device, compared to the floating-point data representation and the fixed-point data representation. A structural arrangement may be optimized in a limited area, so as to improve indicators, such as an operation speed or a ratio of performance to energy consumption.

The process or method depicted in the aforementioned accompanying drawings may be performed by a processing logic that comprise hardware (for example, circuitry, dedicated logic), firmware, software (for example, software embodied on a non-transitory computer-readable medium), or a combination thereof. Although the process or method is depicted in terms of certain sequential operations hereinbefore, it should be appreciated that some depicted operations may be performed in different sequences. Furthermore, some operations may be performed in parallel not in sequence. In addition, for the discrete data representation, it should be appreciated that which data to be discretely represented and which data to be successively represented may be selected. The spirit of whether the data is discretely represented is throughout the entire process.

In the aforementioned description, various implementations of the present disclosure are described with reference to the specific exemplary implementations. Apparently, various modifications may be made to the various implementations without departing from the scope of the invention as defined in the appended claims. Accordingly, the description and the accompanying drawings are to be considered as illustrative and not limitative.

## Claims

1. A device configured to perform a forward operation of an artificial neural network , comprising an interconnecting module, a primary operating module, and a plurality of secondary operating modules,
wherein the interconnecting module implements an H-tree structure, being a binary tree path formed by a plurality of nodes, and wherein each node of the plurality of nodes is configured to transmit upstream data to two downstream nodes, to combine data returned from the two downstream nodes together, and to return to an upstream node;
**characterized in that**
the device further comprises an instruction caching unit, a controller unit, and a data access unit, wherein
the instruction caching unit is configured to read an instruction via the data access unit and cache the read instruction;
the controller unit is configured to read the instruction from the instruction caching unit, and decode the instruction into microinstructions configured to control operations of the interconnecting module, the primary operating module, and the plurality of secondary operating modules;
the data access unit is configured to read discrete data or successive data from an external address space and write in corresponding data caching units of the primary operating module and the plurality of secondary operating modules, or read the discrete data or the successive data from the corresponding data caching units and write in the external address space;
wherein the successively represented data is data represented in floating-point data or fixed-point data, and the discretely represented data is data represented in natural numbers including zero;
when each layer of the artificial neural network starts the forward operation, the primary operating module transmits a discrete or successive input neuron vector of the layer to all of the plurality of the secondary operating modules via the interconnecting module, and after the plurality of secondary operating modules finish calculations, the interconnecting module combines discrete or successive output neuron values of the secondary operating modules into an intermediate result vector stage by stage,
wherein when input data are mixed data including the discrete data and the successive data, the plurality of secondary operating modules are configured to perform bit operation(s) according to the discrete data, wherein corresponding bit operations are preset to replace addition operation, subtraction operation, multiplication operation, and/or division operation for different discrete data; and
the primary operating module is configured to perform subsequent calculations using the intermediate result vector, wherein when the input data are the mixed data including the discrete data and the successive data, the primary operating module is configured to perform bit operation(s) according to the discrete data, wherein corresponding bit operations are preset to replace addition operation, subtraction operation, multiplication operation, and/or division operation on successive data represented by the discrete data; wherein the primary operating module includes an operating unit, a data dependency relationship determining unit, and a neuron caching unit; the neuron caching unit is configured to cache the input data and the output data discretely or successively represented and used by the primary operating module in a calculation process; the operating unit performs various operating functions of the primary operating module, wherein when the input data are the mixed data including the discrete data and the successive data, perform a preset bit operation corresponding to the discrete data; the data dependency relationship determining unit is a port for the operating unit to read from and write in the neuron caching unit, ensures that the successive data or the discrete data in the neuron caching unit do not have reading and writing consistency violation, and reads the discrete or successive input neuron vector from the neuron caching unit, transmits to the secondary operating modules via the interconnecting module; and the intermediate result vector from the interconnecting module is transmitted to the operating unit;
each of the plurality of secondary operating modules includes an operating unit, a data dependency relationship determining unit, a neuron caching unit, and a weight caching unit, wherein the operating unit is configured to receive the micro-instructions transmitted by the controller unit and perform arithmetic logic operations, wherein when the input data are the mixed data including the discrete data and the successive data, perform a preset bit operation corresponding to the discrete data; the data dependency relationship determining unit is configured to perform reading and writing operations on the neuron caching unit supporting the discrete data representation and the weight caching unit supporting the discrete data representation in a calculation process, and ensure the neuron caching unit supporting the discrete data representation and the weight caching unit supporting the discrete data representation do not have reading and writing consistency violation; the neuron caching unit is configured to cache data of the input neuron vector and the output neuron value calculated by the secondary operating module; and the weight caching unit is configured to cache a weight vector discretely or successively represented and required by the secondary operating module in a calculation process;
wherein the operating unit in the primary operating module or the secondary operating module includes an operation determining unit and a mixed data operating unit; when the input data are the mixed data, the operation determining unit determines which bit operation is performed on the mixed data according to the discrete data included in the mixed data, and then, the mixed data operating unit performs corresponding operations according to a result determined by the operation determining unit.

2. The device of claim 1, wherein the plurality of the secondary operating modules are configured to use the same discrete or successive input neuron vector and respective different discrete or successive weight vectors to calculate respective discrete or successive output neuron values in parallel.

3. The device of claim 1, wherein the primary operating module performs any one of following operations on the intermediate result vector:
a biasing operation configured to add bias to the intermediate result vector;
an activating operation configured to activate the intermediate result vector, wherein an activation function is a linear function or one of a sigmoid function, a tanh function, a relu function, and a softmax function;
a sampling operation configured to compare the intermediate result vector with a random number, and output 1 when the intermediate result vector is greater than the random number, otherwise output 0 when the intermediate result vector is less than the random number; and
a pooling operation including maxpooling or avgpooling.

4. The device of claim 1, wherein each of the plurality of secondary operating modules comprises an input neuron caching unit configured to cache the discrete or successive input neuron vector.

5. The device of claim 1, wherein the interconnecting module forms a data path for the successive or discrete data between the primary operating module and the plurality of the secondary operating modules.

6. The device of claim 1, wherein the data dependency relationship determining unit ensures the reading and writing consistency violation by means of determining whether data of microinstructions not executed have a dependency relationship to data of microinstructions being executed;
when the data of the microinstructions not executed do not have the dependency relationship to the data of the microinstructions being executed, the microinstructions are allowed to be transmitted immediately, otherwise the microinstructions not executed are not allowed to be transmitted until all the microinstructions depended on by the microinstructions not executed are executed.

7. The device of claim 6, wherein the operating unit in the primary operating module or the secondary operating module further includes a data type determining unit and at least one of a discrete data operating unit and a successive data operating unit;
when the operating unit includes the discrete data operating unit, and when the input data are merely the discrete data, the discrete data operating unit performs corresponding operations by a look-up table according to the input discrete data;
when the operating unit includes the successive data operating unit, and when the input data are merely the successive data, the successive data operating unit performs corresponding operations.

8. The device of claim 1, further comprising a converting module, wherein the converting module includes a pre-processing unit, a distance calculating unit, and a determining unit, and it is assumed that M discrete data are used where M=2^{m}, m≥1, and the discrete data correspond to M values in a preset interval [-zone, zone], respectively,
the pre-processing unit performs a clip (-zone, zone) operation on an input successive datum x, and obtains a pre-processed datum y in the interval [-zone, zone], wherein if x≤- zone, then y=-zone; if x ≥zone, then y=zone; and if -zone<x<zone, then y=x;
the distance calculating unit calculates distances between the pre-processed datum y and the M discrete data; and
the determining unit calculates discrete data based on the distances and outputs the discrete data.

9. The device of claim 8, wherein the preset interval [-zone, zone] is [-1, 1] or [-2, 2]; or
absolute values of the M values are reciprocals of powers of 2; or
the determining unit outputs a discrete datum corresponding to a value least distant from the pre-processed datum, and when two values are identically distant from the pre-processed datum y, the determining unit outputs a discrete datum corresponding to any one of the two values; or
the determining unit calculates a normalization probability from the pre-processed datum y to any one of two least distant values, compares the normalization probability corresponding to the one of the two least distant values to a random number ranging from 0 to 1 generated by a random number generating unit, wherein a first discrete datum corresponds to the one of the two least distant values, and a second discrete datum corresponds to the other one of the two least distant values, and outputs the first discrete datum when the random number is less than the probability, otherwise outputs the second discrete datum.

10. A method for performing a forward operation of a single-layer artificial neural network using the device of any one of claims 1-9, comprising:
reading, by the data access unit, all the operation instructions of the artificial neural network relating to the forward operation of the single-layer artificial neural network from the external address space, and caching the operation instructions in the instruction caching unit;
reading, by the data access unit, all the discrete data or the successive data being required by the primary operating module and relating to the forward operation of the single-layer artificial neural network from the external address space, and caching the discrete data or the successive data in the neuron caching unit of the primary operating module;
reading, by the data access unit, discretely or successively represented weight matrix data required by the plurality of secondary operating modules from the external address space;
configuring various constants required by the forward operation of the artificial neural network and discretely or successively represented;
transmitting, by the primary operating module, the input neuron vector to each secondary operating module via the interconnecting module, and storing in the neuron caching unit of the secondary operating module supporting the discrete data representation;
reading, by the operating unit of the secondary operating module, the weight vector from the weight caching unit, reading the input neuron vector from the neuron caching unit of the secondary operating module, when the vector does not include discrete data, performing the dot product operation of the weight vector and the input neuron vector, when the vector includes discrete data, replacing the dot product operation with a corresponding bitwise operation according to values of the discrete data by means of the discrete data operating unit, returning the obtained neuron value via the interconnecting module;
combining, in the interconnecting module, neuron values from the plurality of secondary operating modules into the complete intermediate result vector stage by stage;
reading, by the primary operating module, a biasing vector discretely or successively represented from the neuron caching unit of the primary operating module, adding to the intermediate result vector returned by the interconnecting module, then activating an addition result to obtain the output neuron vector, writing the output neuron vector in the neuron caching unit of the primary operating module; and
storing, by the data access unit, the output neuron vector in the neuron caching unit of the primary operating module at a specified address in the external address space.

11. A method for performing a forward operation of a multilayer artificial neural network according to the method of claim 10, comprising:
performing the method of claim 10 for each layer of the multilayer artificial neural network, wherein after a previous layer of the multilayer artificial neural network finishes the operation, using the output neuron address of the previous layer stored in the primary operating module as the input neuron address of a present layer, and the method of claim 10 is performed again for the present layer.

## Patentansprüche

1. Vorrichtung, die dafür ausgebildet ist, eine Vorwärtsoperation eines künstlichen neuronalen Netzwerks durchzuführen, die ein Verbindungsmodul, ein primäres Betriebsmodul und eine Vielzahl von sekundären Betriebsmodulen aufweist;
wobei das Verbindungsmodul eine H-Baum-Struktur implementiert, die ein binärer Baumpfad ist, der durch eine Vielzahl von Netzknoten gebildet ist und wobei jeder Netzknoten der Vielzahl von Netzknoten dafür ausgebildet ist, vorgelagerte Daten an zwei nachgeschaltete Netzknoten zu übertragen, um Daten, die von den beiden nachgeschalteten Netzknoten zurückgeschickt wurden, miteinander zu kombinieren und an einen vorgeschalteten Netzknoten zurückzusenden;
**dadurch gekennzeichnet, dass**
die Vorrichtung ferner eine Befehls-Caching-Einheit, eine Steuereinheit und eine Datenzugriffseinheit umfasst, wobei
die Befehls-Caching-Einheit dafür ausgebildet ist, einen Befehl über die Datenzugriffseinheit auszulesen und den gelesenen Befehl zwischen zu speichern;
die Steuereinheit dafür ausgebildet ist, den Befehl aus der Befehls-Caching-Einheit auszulesen und den Befehl in Mikrobefehle zu decodieren, die dafür ausgebildet sind, Operationen des Verbindungsmoduls, des primären Betriebsmoduls und der Vielzahl von sekundären Betriebsmodulen zu steuern; die Datenzugriffseinheit dafür ausgebildet ist, diskrete Daten oder aufeinanderfolgende Daten aus einem externen Adressraum auszulesen und in entsprechende Daten-Caching-Einheiten des primären Betriebsmoduls und der Vielzahl von sekundären Betriebsmodulen zu schreiben oder die diskreten Daten oder die aufeinanderfolgenden Daten aus den entsprechenden Daten-Caching-Einheiten auszulesen und in den externen Adressraum zu schreiben; wobei die nacheinander dargestellten Daten Daten sind, die in Gleitkommadaten oder Festkommadaten dargestellt sind, und die diskret dargestellten Daten Daten sind, die in natürlichen Zahlen einschließlich Null dargestellt sind;
wenn jede Schicht des künstlichen neuronalen Netzwerks den Vorwärtsbetrieb startet, das primäre Betriebsmodul einen diskreten oder aufeinanderfolgenden Eingabeneuronenvektor der Schicht an die Vielzahl der sekundären Betriebsmodule über das Verbindungsmodul überträgt, und nachdem die Vielzahl der sekundären Betriebsmodule die Berechnungen beenden, das Verbindungsmodul diskrete oder aufeinanderfolgende Ausgabeneuronenwerte der sekundären Betriebsmodule Schritt für Schritt zu einem Zwischenergebnisvektor kombiniert ,
wobei, wenn Eingabedaten gemischte Daten sind, einschließlich der diskreten Daten und der aufeinanderfolgenden Daten, sind die Vielzahl sekundärer Betriebsmodule dafür ausgebildet, Bitoperation gemäß den diskreten Daten auszuführen, wobei entsprechende Bitoperation voreingestellt sind, um die Additionsverfahren, Subtraktionsverfahren, Multiplikationsverfahren und/oder Divisionsverfahren für verschiedene diskrete Daten zu ersetzen; und
das primäre Betriebsmodul dafür ausgebildet ist, nachfolgende Berechnungen unter Verwendung des Zwischenergebnisvektors durchzuführen, wobei, wenn die Eingabedaten die gemischten Daten einschließlich der diskreten Daten und der aufeinanderfolgenden Daten sind, das primäre Betriebsmodul dafür ausgebildet ist, (eine) Bitoperationen gemäß den diskreten Daten durchzuführen, wobei entsprechende Bitoperationen vorgegeben sind, um Additionsverfahren, Subtraktionsverfahren, Multiplikationsverfahren und/oder Divisionsverfahren an aufeinanderfolgenden Daten zu ersetzen, die durch die diskreten Daten dargestellt sind;
wobei das primäre Betriebsmodul eine Bedieneinheit, eine Bestimmungseinheit für Datenabhängigkeitsbeziehungen und eine Neuronen-Caching-Einheit umfasst; wobei die Neuronen-Caching-Einheit dafür ausgebildet ist, die Eingabedaten und die Ausgabedaten zwischen zu speichern, die diskret oder nacheinander vom primären Betriebsmodul in einem Berechnungsprozess dargestellt und verwendet werden; die Bedieneinheit verschiedene Betriebsfunktionen des primären Betriebsmoduls ausführt, wobei, wenn die Eingabedaten die gemischten Daten einschließlich der diskreten Daten und der aufeinanderfolgenden Daten sind, eine vorbestimmte Bitoperation ausgeführt wird, die den diskreten Daten entspricht; die Bestimmungseinheit für Datenabhängigkeitsbeziehungen ein Port für die Bedieneinheit ist zum Auslesen aus und Schreiben in die Neuronen-Caching-Einheit, sie sicherstellt, dass die aufeinanderfolgenden Daten oder die diskreten Daten in der Neuronen-Caching-Einheit keine Lese- und Schreibkonsistenzverletzung aufweisen, und den diskreten oder aufeinanderfolgenden Eingabeneuronenvektor aus der Neuronen-Caching-Einheit ausliest, über das Verbindungsmodul an die sekundären Betriebsmodule überträgt;; und der Zwischenergebnisvektor von dem Verbindungsmodul an die Bedieneinheit übertragen wird;
wobei jedes der Vielzahl von sekundären Betriebsmodulen eine Bedieneinheit , eine Bestimmungseinheit für Datenabhängigkeitsbeziehungen , eine Neuronen-Caching-Einheit und eine Gewichtungs-Caching-Einheit aufweist, wobei die Bedieneinheit dafür ausgebildet ist, die von der Steuereinheit übertragenen Mikrobefehle zu empfangen und arithmetische Logikoperationen auszuführen, wobei, wenn die Eingabedaten die gemischten Daten sind, einschließlich der diskreten Daten und der aufeinanderfolgenden Daten, sie eine vorbestimmte Bitoperation ausführt, die den diskreten Daten entspricht.; wobei die Bestimmungseinheit für Datenabhängigkeitsbeziehungen dafür ausgebildet ist, Auslese- und Schreiboperationen an der Neuronen-Caching-Einheit durchzuführen, die die diskrete Datendarstellung unterstützt, und die Gewichtungs-Caching-Einheit, die die diskrete Datendarstellung in einem Berechnungsprozess unterstützt, und sicherzustellen, dass die Neuronen-Caching-Einheit, die die diskrete Datendarstellung unterstützt, und die Gewichtungs-Caching-Einheit, die die diskrete Datendarstellung unterstützt, keine Verletzung der Lese- und Schreibkonsistenz aufweisen; wobei die Neuronen-Caching-Einheit dafür ausgebildet ist, Daten des Eingabeneuronenvektors und des vom sekundären Betriebsmodul berechneten Ausgabeneuronenwertes zwischen zu speichern; und wobei die Gewichtungs-Caching-Einheit dafür ausgebildet ist, einen Gewichtsvektor zwischen zu speichern, der diskret oder aufeinanderfolgend dargestellt ist und von dem sekundären Betriebsmodul in einem Berechnungsprozess benötigt wird;
wobei die Bedieneinheit in dem primären Betriebsmodul oder dem sekundären Betriebsmodul eine Betriebsbestimmungseinheit und eine Bedieneinheit für gemischte Daten umfasst; wobei, wenn die Eingabedaten die gemischten Daten sind, die Operationsbestimmungseinheit bestimmt, welche Bitoperation an den gemischten Daten gemäß den in den gemischten Daten enthaltenen diskreten Daten ausgeführt wird, und dann die gemischte Datenoperationseinheit entsprechende Operationen gemäß einem durch die Betriebsbestimmungseinheit bestimmten Ergebnis ausführt.

2. Vorrichtung gemäß Anspruch 1, wobei die Vielzahl von sekundären Betriebsmodulen dafür ausgebildet sind, denselben diskreten oder aufeinanderfolgenden Eingabeneuronenvektor und jeweils unterschiedliche diskrete oder aufeinanderfolgende Gewichtsvektoren zu verwenden, um jeweils diskrete oder aufeinanderfolgende Ausgabeneuronenwerte parallel zu berechnen.

3. Vorrichtung gemäß Anspruch 1, wobei das primäre Betriebsmodul eine der folgenden Operationen an dem Zwischenergebnisvektor ausführt:
eine Vorspannungsoperation, die dafür ausgebildet ist, dem Zwischenergebnisvektor eine Vorspannung hinzuzufügen;
eine Aktivierungsoperation, die dafür ausgebildet ist, den Zwischenergebnisvektor zu aktivieren, wobei eine Aktivierungsfunktion eine lineare Funktion oder eine aus einer sigmoidalen Funktion, einer Tanh-Funktion, einer Relu-Funktion und einer Softmax-Funktion ist;
eine Abtastoperation, die dafür ausgebildet ist, den Zwischenergebnisvektor mit einer Zufallszahl zu vergleichen und 1 auszugeben, wenn der Zwischenergebnisvektor größer als die Zufallszahl ist, andernfalls wird O ausgegeben, wenn der Zwischenergebnisvektor kleiner als die Zufallszahl ist;
und eine Pooling-Operation einschließlich Maxpooling oder Durchschnittspooling.

4. Vorrichtung gemäß Anspruch 1, wobei jedes der Vielzahl von sekundären Betriebsmodulen eine Eingabeneuronen-Caching-Einheit umfasst, die dafür ausgebildet ist, den diskreten oder aufeinanderfolgenden Eingabeneuronenvektor zwischen zu speichern.

5. Vorrichtung gemäß Anspruch 1, wobei das Verbindungsmodul einen Datenpfad bildet für die aufeinanderfolgenden oder diskreten Daten zwischen dem primären Betriebsmodul und der Vielzahl der sekundären Betriebsmodule.

6. Vorrichtung gemäß Anspruch 1, wobei die Bestimmungseinheit für Datenabhängigkeitsbeziehungen die Lese- und Schreibkonsistenzverletzung sicherstellt, indem sie bestimmt, ob Daten von nicht ausgeführten Mikrobefehlen eine Abhängigkeitsbeziehung zu Daten von ausgeführten Mikrobefehlen aufweisen;
Wobei wenn die Daten der nicht ausgeführten Mikrobefehle nicht die Abhängigkeitsbeziehung zu den Daten der ausgeführten Mikrobefehle haben, die Mikrobefehle sofort übertragen werden dürfen, andernfalls dürfen die nicht ausgeführten Mikrobefehle erst übertragen werden, wenn alle Mikrobefehle ausgeführt sind, die von den nicht ausgeführten Mikrobefehlen abhängen.

7. Vorrichtung gemäß Anspruch 6, wobei die Bedieneinheit in dem primären Betriebsmodul oder dem sekundären Betriebsmodul ferner eine Datentypbestimmungseinheit und mindestens eine diskrete Datenbetriebseinheit und eine aufeinanderfolgende Datenbetriebseinheit umfasst;
wobei wenn die Bedieneinheit die Betriebseinheit für diskrete Daten enthält und wenn die Eingabedaten lediglich die diskreten Daten sind, die Bedieneinheit für diskrete Daten entsprechende Operationen anhand einer Nachschlagetabelle gemäß den diskreten Eingabedaten ausführt;
wobei wenn die Bedieneinheit die aufeinanderfolgende Datenbedieneinheit enthält und wenn die Eingabedaten lediglich die aufeinanderfolgenden Daten sind, die aufeinanderfolgende Datenbedieneinheit entsprechende Operationen ausführt.

8. Vorrichtung gemäß Anspruch 1, ferner umfassend ein Umwandlungsmodul, wobei das Umwandlungsmodul eine Vorverarbeitungseinheit, eine Abstandsberechnungseinheit und eine Bestimmungseinheit umfasst, und es wird angenommen, dass M diskrete Daten verwendet werden, wobei M=2^{m}, m≥1, und die diskreten Daten jeweils M-Werten in einem vorgegebenen Intervall [-Zone, Zone] entsprechen,
die Vorverarbeitungseinheit eine Clip-Operation (-Zone, Zone) an einem fortlaufenden EingabeDatenfestpunkt x ausführt, und einen vorverarbeiteten Datenfestpunkt y in dem Intervall [-Zone, Zone] erhält, wobei wenn x ≤ -Zone, dann ist y = -Zone; wenn x ≥ Zone, dann ist y = Zone; und wenn -Zone < x < Zone, dann ist y = x;
die Entfernungsberechnungseinheit Entfernungen zwischen dem vorverarbeiteten Datenfestpunkt y und den M diskreten Daten berechnet; und die Bestimmungseinheit diskrete Daten basierend auf den Entfernungen berechnet und die diskreten Daten ausgibt.

9. Vorrichtung gemäß Anspruch 8, wobei das vorgegebene Intervall [-Zone, Zone] [-1, 1] oder [-2, 2] ist; oder
Absolutwerte der M-Werte Kehrwerte von Potenzen von 2 sind; oder
die Bestimmungseinheit einen diskreten Datenfestpunkt ausgibt, der einem Wert entspricht, der am wenigsten weit von dem vorverarbeiteten Datenfestpunkt entfernt ist, und wenn zwei Werte identisch weit von dem vorverarbeiteten Datenfestpunkt y entfernt sind, die Bestimmungseinheit einen diskreten Datenfestpunkt ausgibt, der irgendeinem der beiden Werte entspricht; oder
die Bestimmungseinheit eine Normalisierungswahrscheinlichkeit anhand des vorverarbeiteten Datenfestpunktes y zu einem von zwei am wenigsten entfernten Werten berechnet, die Normalisierungswahrscheinlichkeit, die dem einen der beiden am wenigsten entfernten Werte entspricht, mit einer Zufallszahl im Bereich von 0 bis 1 vergleicht, die durch eine Erzeugungseinheit für zufällige Zahlen erzeugt wird, wobei ein erster diskreter Datenfestpunkt dem einen der beiden am wenigsten entfernten Werte entspricht, und ein zweiter diskreter Datenfestpunkt dem anderen der beiden am wenigsten entfernten Werte entspricht, und den ersten diskreten Datenfestpunkt ausgibt, wenn die Zufallszahl kleiner ist als die Wahrscheinlichkeit, sonst aber den zweiten diskreten Datenfestpunkt ausgibt.

10. Verfahren zum Durchführen einer Vorwärtsoperation eines einschichtigen künstlichen neuronalen Netzwerks unter Verwendung der Vorrichtung nach irgendeinem der Ansprüche 1 bis 9, umfassend:
Auslesen durch die Datenzugriffseinheit aller Betriebsanweisungen, die sich auf den Vorwärtsbetrieb des einschichtigen künstlichen neuronalen Netzwerks beziehen, des künstlichen neuronalen Netzwerks aus dem externen Adressraum, und Zwischenspeichern der Betriebsanweisungen in der Befehls-Zwischenspeichereinheit;
Auslesen durch die Datenzugriffseinheit aller diskreten Daten oder aufeinanderfolgenden Daten, die das primäre Betriebsmodul benötigt und die sich auf den Vorwärtsbetrieb des einschichtigen künstlichen neuronalen Netzwerks beziehen, aus dem externen Adressraum, und Zwischenspeichern der diskreten Daten oder der aufeinanderfolgenden Daten in der Neuronen-Caching-Einheit des primären Betriebsmoduls;
Auslesen durch die Datenzugriffseinheit von diskret oder nacheinander dargestellten Gewichtsmatrixdaten, die für die Vielzahl von sekundären Betriebsmodulen erforderlich sind, aus dem externen Adressraum;
Konfigurieren verschiedener Konstanten, die für den Vorwärtsbetrieb des künstlichen neuronalen Netzwerks erforderlich sind und diskret oder nacheinander dargestellt werden;
Übertragen des Eingabeneuronenvektors durch das primäre Betriebsmodul an jedes sekundäre Betriebsmodul über das Verbindungsmodul und Speichern in der Neuronen-Caching-Einheit des sekundären Betriebsmoduls, das die diskrete Datendarstellung unterstützt;
Auslesen des Gewichtsvektors aus der Gewichts-Caching-Einheit durch die Bedieneinheit des sekundären Betriebsmoduls, Auslesen des Eingabeneuronenvektors aus der Neuronen-Caching-Einheit des sekundären Betriebsmoduls, wenn der Vektor keine diskreten Daten enthält, Ausführen des Punktproduktoperation des Gewichtsvektors und des Eingabeneuronenvektors, wenn der Vektor diskrete Daten enthält, Ersetzen der Punktproduktoperation durch eine entsprechende bitweise Operation gemäß Werten der diskreten Daten mittels der Betriebseinheit für diskrete Daten, wobei der erhaltene Neuronen-Wert über das Verbindungsmodul zurückgegeben wird;
Kombinieren von Neuronen-Werten aus der Vielzahl von sekundären Betriebsmodulen in dem Verbindungszwischenmodul Schritt für Schritt zu dem vollständigen Zwischenergebnisvektor;
Auslesen eines Vorspannungsvektors, der diskret oder nacheinander von der Neuronen-Caching-Einheit des primären Betriebsmoduls dargestellt wird, durch das primäre Betriebsmodul, Hinzufügen zu dem vom Verbindungsmodul zurückgegebenen Zwischenergebnisvektor, dann Aktivieren eines Additionsergebnisses, um den Ausgabeneuronenvektor zu erhalten, Schreiben des Ausgabeneuronenvektors in die Neuronen-Caching-Einheit des primären Betriebsmoduls; und
Speichern durch die Datenzugriffseinheit des Ausgabeneuronenvektors in der Neuronen-Caching-Einheit des primären Betriebsmoduls an einer bestimmten Adresse im externen Adressraum.

11. Verfahren zum Durchführen einer Vorwärtsoperation eines mehrschichtigen künstlichen neuronalen Netzwerks gemäß dem Verfahren nach Anspruch 10, umfassend:
Durchführen des Verfahrens nach Anspruch 10 für jede Schicht des mehrschichtigen künstlichen neuronalen Netzwerks, wobei, nachdem eine vorherige Schicht des mehrschichtigen künstlichen neuronalen Netzwerks die Operation beendet hat, die Ausgabeneuronenadresse der vorherigen Schicht, die in dem primären Betriebsmodul gespeichert ist, als Eingabeneuronenadresse einer vorliegenden Schicht verwendet wird, und das Verfahren nach Anspruch 10 wieder durchgeführt wird für die vorliegende Schicht.

## Revendications

1. Dispositif configuré pour effectuer une opération en avant d'un réseau neuronal artificiel, comprenant un module d'interconnexion, un module d'opération primaire et une pluralité de modules d'opération secondaires, dans lequel le module d'interconnexion met en œuvre une structure d'arbre en H, qui est une voie arborescente binaire formée par une pluralité de nœuds, et dans lequel chaque nœud de la pluralité de nœuds est configuré pour transmettre des données ascendantes à deux nœuds en aval pour combiner des données retournées des deux nœuds en aval les unes avec les autres et pour les retourner à un nœud en amont ;
**caractérisé en ce que**
le dispositif comprend en outre une unité de mise en antémémoire d'instructions, une unité de commande et une unité d'accès aux données, dans lequel
l'unité de mise en antémémoire est configurée pour lire une instruction via l'unité d'accès aux données et pour mettre l'instruction lue en antémémoire ; l'unité de commande est configurée pour lire l'instruction dans l'unité de mise en antémémoire et pour décoder l'instruction dans des micro-instructions configurées pour commander des opérations du module d'interconnexion, du module d'opération primaire et de la pluralité de modules d'opération secondaires ;
l'unité d'accès aux données est configurée pour lire des données discrètes ou des données successives dans un espace d'adresse externe et pour les écrire dans des unités de mise en antémémoire correspondantes du module d'opération primaire et de la pluralité de modules d'opération secondaires ou pour lire les données discrètes ou les données successives dans les unités de mise en antémémoire correspondantes et pour les écrire dans l' espace d'adresse externe ;
dans lequel les données représentées successivement sont des données représentées par des données en virgule flottante ou des données en virgule fixe, et les données représentées discrètement sont des données représentées par des nombres naturels, zéro y compris ;
si chaque couche du réseau neuronal artificiel commence l'opération an avant, le module d'opération primaire transmet un vecteur de neurones d'entrée discret ou successif de la couche à tous les modules de la pluralité de modules d'opération secondaires via le module d'interconnexion et après que la pluralité de modules d'opération secondaires finissent des calculs, le module d'interconnexion combine des valeurs de neurone de sortie discrètes ou successives des modules d'opération secondaires dans un vecteur de résultat intermédiaire étape par étape,
dans lequel si des données d'entrée sont des données mélangées comprenant les données discrètes et les données successives, la pluralité de modules d'opération secondaires sont configurés pour effectuer une (des) opération(s) de bits selon les données discrètes, dans lequel des opérations de bits correspondantes sont prédéterminées pour remplacer des opérations d'addition, des opérations de soustraction, des opérations de multiplication et/ou des opérations de division pour des données discrètes différentes ; et
le module d'opération primaire est configuré pour effectuer des calculs suivants en utilisant le vecteur de résultat intermédiaire, dans lequel si des données d'entrée sont les données mélangées comprenant les données discrètes et les données successives, le module d'opération primaire est configuré pour effectuer une (des) opération(s) de bits selon les données discrètes, dans lequel des opérations de bits correspondantes sont prédéterminées pour remplacer des opérations d'addition, des opérations de soustraction, des opérations de multiplication et/ou des opérations de division avec des données successives représentées par les données discrètes ;
dans lequel le module d'opération primaire comprend une unité opérationnelle, une unité de détermination de rapports de dépendance de données et une unité de mise en antémémoire de neurones ; l'unité de mise en antémémoire de neurones étant configurée pour stocker temporairement les données d'entrée et les données de sortie représentées discrètement ou successivement et utilisées par le module d'opération primaire dans un procédé de calcul ; l'unité opérationnelle effectue des fonctions opérationnelles diverses du module d'opération primaire, dans lequel si les données d'entrée sont les données mélangées comprenant les données discrètes et les données successives, elle effectue une opération de bits prédéterminée correspondant aux données discrètes, dans lequel l'unité de détermination de rapports de dépendance de données est un port pour l'unité opérationnelle pour lire et écrire dans l'unité de mise en antémémoire de neurones, et elle assure que les données successives ou les données discrètes dans l'unité de mise en antémémoire de neurones ne présentent pas de violations de cohérence de lecture et d'écriture, et elle lit le vecteur de neurones d'entrée discret ou successif dans l'unité de mise en antémémoire de neurones et le transmet aux modules d'opération secondaires via le module d'interconnexion ; et le vecteur de résultat intermédiaire est transmis du module d'interconnexion à l'unité opérationnelle :
chacun de la pluralité de modules d'opération secondaires comprend une unité opérationnelle , une unité de détermination de rapports de dépendance de données, une unité de mise en antémémoire de neurones et une unité de mise en antémémoire de poids, dans lequel l'unité opérationnelle est configurée pour recevoir les micro-instructions transmises par l'unité de commande et pour effectuer des opérations logiques arithmétiques, dans lequel si les données d'entrée sont les données mélangées comprenant les données discrètes et les données successives, elle effectuera une opération de bits prédéterminée correspondant aux données discrètes ; l'unité de détermination de rapports de dépendance de données est configurée pour effectuer des opérations de lecture et d'écriture dans l'unité de mise en antémémoire de neurones, qui soutient la représentation de données discrètes, et l'unité de mise en antémémoire de poids soutient la représentation de données discrètes dans un procédé de calcul, et elle assure que l'unité de mise en antémémoire de neurones, qui soutient la représentation de données discrètes et l'unité de mise en antémémoire de poids, qui soutient la représentation de données discrètes, ne présentent pas de violations de cohérence de lecture et d'écriture ; et l'unité de mise en antémémoire de neurones est configurée pour stocker temporairement des données du vecteur de neurones d'entrée et la valeur de neurones de sortie calculée par le module d'opération secondaire ;
et l'unité de mise en antémémoire de poids est configurée pour stocker temporairement un vecteur de poids représenté discrètement ou successivement et exigé par le module d'opération secondaire dans un procédé de calcul :
dans lequel l'unité opérationnelle dans le module d'opération primaire ou le module d'opération secondaire comprend une unité de détermination d'opérations et une unité d'opération de données mélangées :
si les données d'entrée sont des données mélangées, l'unité de détermination d'opérations détermine quelle opération est effectuée avec les données mélangées correspondant aux données discrètes comprises dans les données mélangées, et ensuite l'unité d'opération de données mélangées effectue des opérations correspondantes selon un résultat déterminé par l'unité de détermination d'opérations.

2. Dispositif selon la revendication 1, dans lequel la pluralité de modules d'opération secondaires sont configurés pour utiliser le même vecteur de neurones d'entrée discret ou successif et des vecteurs de poids discrets ou successifs différents respectifs pour calculer parallèlement des valeurs de neurones de sortie discrètes ou successives respectives.

3. Dispositif selon la revendication 1, dans lequel le module d'opération primaire effectue une des opérations suivantes sur le vecteur de résultat intermédiaire :
une opération de mise sous tension configurée pour ajouter une tension au vecteur de résultat intermédiaire ;
une opération d'activation configurée pour activer le vecteur de résultat intermédiaire ; dans lequel une fonction d'activation est une fonction linéaire ou une parmi une fonction sigmoïde ou une fonction tanh, une fonction de relance et une fonction softmax ;
une opération de sondage configurée pour comparer le vecteur de résultat intermédiaire avec un nombre aléatoire, et pour sortir 1, si le vecteur de résultat intermédiaire est plus grand que le nombre aléatoire, sinon pour sortir 0, si le vecteur de résultat intermédiaire est inférieur au nombre aléatoire ; et
une opération de regroupement, comprenant « maxpooling » ou « avgpooling ».

4. Dispositif selon la revendication 1, dans lequel chacun de la pluralité de modules d'opération secondaires comprend une unité de mise en antémémoire de neurones d'entrée configurée pour stocker temporairement le vecteur de neurones d'entrée discret ou successif.

5. Dispositif selon la revendication 1, dans lequel le module s'interconnexion forme un chemin des données pour les données successives ou discrètes entre le module d'opération primaire et la pluralité de modules d'opération secondaires.

6. Dispositif selon la revendication 1, dans lequel l'unité de détermination de rapports de dépendance de données assure la violation de cohérence de lecture et d'écriture en déterminant, si des données des micro-instructions non effectuées ont un rapport de dépendance avec des données des micro-instructions, qui ont été effectuées ;
si les données des micro-instructions non effectuées n'ont pas de rapport de dépendance avec les données des micro-instructions, qui ont été effectuées, les micro-instructions peuvent être transmises immédiatement, sinon les micro-instructions non effectuées ne peuvent pas être transmises jusqu'à ce que toutes les micro-instructions dépendantes des micro-instructions non exécutées soient exécutées.

7. Dispositif selon la revendication 6, dans lequel l'unité opérationnelle dans le module d'opération primaire ou le module d'opération secondaire comprend en outre une unité de détermination de type de données et au moins l'une parmi une unité d'opération de données discrètes et une unité d'opération de données successives ;
si l'unité d'opération comprend l'unité d'opération de données discrètes et si les données d'entrée sont uniquement les données discrètes, l'unité d'opération de données discrètes effectue des opérations correspondantes à l'aide d'un tableau de référence correspondant aux données d'entrée discrètes ;
si l'unité d'opération comprend l'unité d'opération de données successives et si les données d'entrée sont uniquement les données successives, l'unité d'opération de données successives effectue des opérations correspondantes.

8. Dispositif selon la revendication 1, comprenant en outre un module de conversion, dans lequel le module de conversion comprend une unité de pré-traitement, une unité de calcul de distance et une unité de détermination, et on suppose que M données discrètes sont utilisées, où M = 2^{m}, m ≥ 1, et les données discrètes correspondent respectivement à M valeurs dans un intervalle prédéfini [-zone, zone],
l'unité de pré-traitement effectue une opération d'attache (-zone, zone) avec une donnée d'entrée successive x et obtient une donnée prétraitée y dans l'intervalle [-zone, zone], dans lequel si x ≤ -zone, y = -zone, si x ≥ zone, y = zone ; et si -zone < x < zone, y = x ;
l'unité de calcul de distance calcule des distances entre la donnée prétraitée y et les M données discrètes, et
l'unité de détermination calcule des données discrètes sur la base des distances et sort les données discrètes.

9. Dispositif selon la revendication 8, dans lequel l'intervalle prédéfini [-zone, zone] est [-1, 1] ou [-2, 2] ou
des valeurs absolues des valeurs M sont des valeurs réciproques des puissances de 2 ; ou
l'unité de détermination sort une donnée discrète correspondant à une valeur, qui est le moins éloignée de la donnée prétraitée, et si deux valeurs sont identiquement éloignées de la donnée prétraitée y, l'unité de détermination sort une donnée discrète correspondant à l'une des deux valeurs ; ou
l'unité de détermination calcule une probabilité de normalisation à partir de la donnée prétraitée y par rapport à l'une de deux valeurs le moins éloignées, compare la probabilité de normalisation correspondant 'l'une des deux valeurs le moins éloignées à un nombre aléatoire compris entre 0 et 1 et généré par une unité de génération de nombres aléatoires, dans lequel une première donnée discrète correspond à l'une des deux valeurs le moins éloignées, et une deuxième donnée discrète correspond à l'autre des deux valeurs le moins éloignées, et elle sort la première donnée discrète, si le nombre aléatoire est inférieur à la probabilité, sinon elle sort la deuxième donnée discrète.

10. Procédé pour effectuer une opération en avant d'un réseau neuronal artificiel comprenant une seule couche en utilisant le dispositif selon l'une quelconque des revendications 1 à 9, comprenant les étapes de :
lire, à l'aide de l'unité d'accès aux données, toutes les instructions d'opération du réseau neuronal artificiel, qui se réfèrent à l'opération en avant du réseau neuronal artificiel comprenant une seule couche, dans l'espace d'adresses externe et stocker temporairement les instructions opération dans l'unité de mise en antémémoire ;
lire, à l'aide de l'unité d'accès aux données, toutes les données discrètes ou les données successives, qui sont nécessaires pour le module d'opération primaire et qui se réfèrent à l'opération en avant du réseau neuronal artificiel comprenant une seule couche, dans l'espace d'adresses externe et stocker temporairement les données discrètes ou les données successives dans l'unité de mise en antémémoire de neurones du module d'opération primaire ;
lire, à l'aide de l'unité d'accès aux données, des données de matrice de poids représentées discrètement ou successivement, qui sont nécessaires pour la pluralité de modules d'opération secondaires, dans l'espace d'adresses externe ;
configurer des constantes diverses nécessaires pour l'opération en avant du réseau neuronal artificiel et représentées discrètement ou successivement ;
transmettre, à l'aide du module d'opération primaire, le vecteur de neurones d'entrée à chaque module d'opération secondaire via le module d'interconnexion, et le stocker dans l'unité de mise en antémémoire du module d'opération secondaire, qui soutient la représentation discrète de données ;
lire, à l'aide de l'unité d'opération du module d'opération secondaire, le vecteur de poids dans l'unité de mise en antémémoire de poids, lire le vecteur de neurones d'entrée dans l'unité de mise en antémémoire de neurones du module d'opération secondaire, si le vecteur ne comprend pas de données discrètes, effectuer l'opération de produit scalaire du vecteur de poids et du vecteur de neurones d'entrée, si le vecteur comprend des données discrètes, remplacer l'opération de produit scalaire par une opération bit à bit correspondante selon des valeurs des données discrètes par moyen de l'unité d'opération de données discrètes, renvoyer la valeur de neurone obtenue via le module d'interconnexion ;
combiner étape par étape, dans le module d'interconnexion, des valeurs de neurones de la pluralité de modules d'opération secondaires pour obtenir le vecteur de résultat intermédiaire complet ;
lire, à l'aide du module d'opération primaire, un vecteur de polarisation représenté discrètement ou successivement dans l'unité de mise en antémémoire de neurones du module d'opération primaire, l'ajouter au vecteur de résultat intermédiaire renvoyé par le module d'interconnexion, ensuite activer un résultat d'addition pour obtenir le vecteur de neurones de sortie, écrire le vecteur de neurones de sortie dans l'unité de mise en antémémoire de neurones du module d'opération primaire, et
stocker, à l'aide de l'unité d'accès aux données, le vecteur de neurones de sortie dans l'unité de mise en antémémoire de neurones du module d'opération primaire à une adresse spécifiée dans l'espace d'adresse externe.

11. Procédé pour effectuer une opération en avant d'un réseau neuronal artificiel à multicouches selon le procédé de la revendication 10, comprenant les étapes de :
effectuer le procédé de la revendication 10 pour chaque couche du réseau neuronal artificiel à multicouches, dans lequel après qu'une couche précédente du réseau neuronal artificiel à multicouches finisse l'opération, on utilise l'adresse de neurones de sortie de la couche précédente stockée dans le module d'opération primaire comme l'adresse de neurones d'entrée d'une couche actuelle et le procédé de la revendication 10 est effectué de nouveau pour la couche actuelle.
